(19) Europäisches Patentamt
European Patent Office
Office européen des brevets

(11) Veröffentlichungsnummer: **0 053 100**
**B1**

(12) # EUROPÄISCHE PATENTSCHRIFT

(45) Veröffentlichungstag der Patentschrift: **19.09.84**

(51) Int. Cl.³ **A 01 N 53/00** // (A01N53/00, 43/68)

(21) Anmeldenummer: **81810460.6**

(22) Anmeldetag: **19.11.81**

(54) **Schädlingsbekämpfungsmittel.**

(30) Priorität: **25.11.80 CH 8707/80**
**25.11.80 CH 8704/80**

(43) Veröffentlichungstag der Anmeldung: **02.06.82 Patentblatt 82/22**

(45) Bekanntmachung des Hinweises auf die Patenterteilung: **19.09.84 Patentblatt 84/38**

(84) Benannte Vertragsstaaten: **AT BE CH DE FR IT LI NL**

(56) Entgegenhaltungen:
**FR - A - 2 362 134**

**CENTRAL PATENT INDEX, Basic abstract Journal, C-ACDOC, Woche U/43, Zusammenfassung Nr. 64754u, Derwent Publications Ltd., London, G.B.**
**JOURNAL OF MEDICINAL CHEMISTRY, Band 10, Nr. 3, Mai 1967, Seite 457, American Chemical Society Washington D.C., U.S.A. A.B. BORKOVEC et al.: "Insect chemosterilants. V. Derivatives of melamine"**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Laanio, Verena, Schützenhausweg 7, CH-4411 Arisdorf (CH)**
Erfinder: **von Orelli, Marcus, Dr., Akazienstrasse 6, CH-4142 Münchenstein (CH)**
Erfinder: **Häusermann, Walter, Dr., Avenue de la Gare 24, CH-1870 Monthey (CH)**

**EP 0 053 100 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft neue insektizide und akarizide Mittel, welche neben einem oder mehreren inerten Zusatzstoffen eine Wirkstoffkombination enthalten, und die Verwendung solcher Wirkstoffkombinationen oder sie enthaltender Mittel zur Bekämpfung von Insekten und Milben (Ordnung Acarina).

Die Bekämpfung von Schädlingen wirft in zunehmendem Maße große Probleme auf, wobei insbesondere die Umweltbelastung einerseits und die Resistenzbildung andererseits eine wesentliche Rolle spielen. Obwohl zahlreiche Schädlingsbekämpfungsmittel zur Verfügung stehen, sind dem Einsatz chemischer Substanzen durch die zunehmende Umweltbelastung Grenzen gesetzt. Ist jedoch – bedingt durch geringere Aufwandmengen – die Gewähr für die restlose Vernichtung einer Schädlingspopulation einschließlich ihrer verschiedenen Entwicklungsstadien nicht mehr gegeben, so wird damit häufig einer Resistenzentwicklung Vorschub geleistet. Es kommt zum Aufbau von Schädlingspopulationen, welche mit den vorgängig eingesetzten Substanzen nur noch unzureichend oder überhaupt nicht mehr bekämpft werden können. Dabei kann Resistenz nicht nur gegenüber einzelnen Substanzen, sondern auch gegenüber Substanzklassen aufgebaut werden.

Es ist daher wünschenswert, bei der Schädlingsbekämpfung Mittel zu verwenden, welche bei tolerierbaren Aufwandmengen einer Resistenzbildung abträglich sind.

Es ist daher ein Ziel der vorliegenden Erfindung, Mittel zur Bekämpfung von Insekten und Milben (Ordnung Acarina), insbesondere parasitären und vor allem tierparasitären Milben, zur Verfügung zu stellen, mit denen bei ökologisch vertretbaren Aufwandmengen eine wirksame Bekämpfung der Schädlinge unter weitgehender Vermeidung von Resistenzbildung erzielt wird.

Die erfindungsgemäßen Mittel sind dadurch gekennzeichnet, daß die Wirkstoffkombination, welche sie enthalten, aus einer Verbindung der Formel I

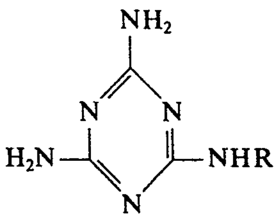

(I)

in welcher R eine Cyclopropyl- oder Isopropylgruppe bedeutet, und einer Verbindung, ausgewählt aus der Gruppe bestehend aus 3-(1,2-Dibrom-2,2-dichlor-äthyl)-2,2-dimethyl-cyclopropancarbonsäure-(α-cyan-3-phenoxybenzyl)ester der Formel IIa

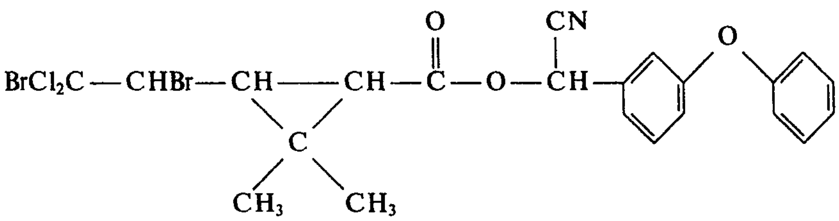

(IIa)

3-(2,2-Dichlorvinyl)-2,2-dimethylcyclopropancarbonsäure-(3-phenoxybenzyl)ester der Formel IIb

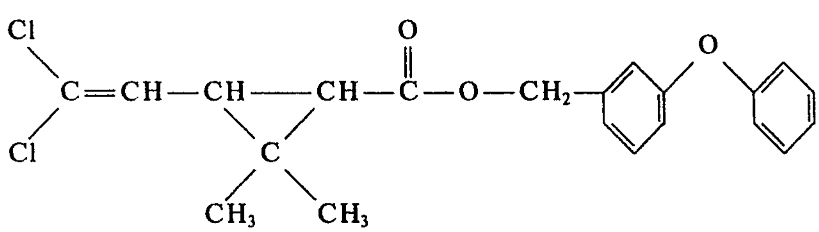

(IIb)

1 H-Inden-1-spiro-1'-[2,2-dimethyl-3-((α-cyano-3-phenoxybenzyl)-oxycarbonyl)-cyclopropan] der Formel IIc

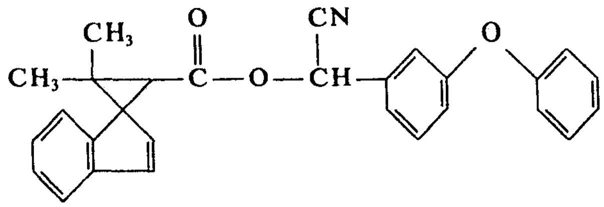

(IIc)

2-(4-Chlorphenyl)-isovaleriansäure-(α-cyano-3-phenoxybenzyl)ester der Formel IId

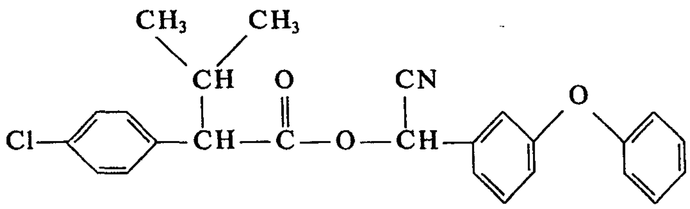

(IId)

und (1 RS) - cis,trans - 3 - (2,2 - Dichlorvinyl) - 2,2 - dimethylcyclopropancarbonsäure - (RS) - (α-cyan-3-phenoxybenzyl)ester der Formel IIe

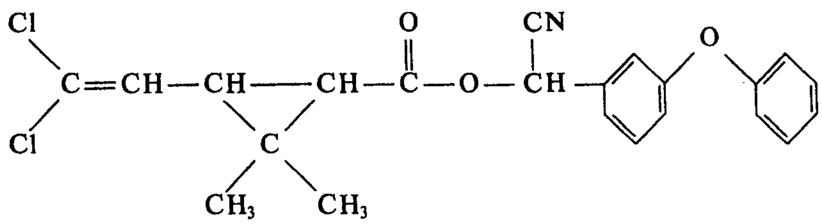

(IIe)

besteht.

Die einzelnen Wirkstoffkomponenten, aus denen sich die Wirkstoffkombinationen zusammensetzen, sind als Pestizide bekannt und lassen sich nach bekannten Methoden herstellen.

Die Verbindung der Formel I, in welcher R für eine Cyclopropylgruppe steht, ist beschrieben in der BE-PS 857 896; die Verbindung der Formel I, in welcher R für eine Isopropylgruppe steht, ist bekannt aus J. Med. Chem. 10 (1967), 457; die Verbindung der Formel IIa ist beschrieben in der DE-OS 2 805 226; die Verbindung der Formel IIb ist beschrieben in Nature (London), 1973, 246, 169 und bekannt unter der Bezeichnung Permethrin; die Verbindung der Formel IIc ist beschrieben in der US-PS 3 966 959 und bekannt unter der Bezeichnung Cypothrin; die Verbindung der Formel IId ist beschrieben in der GB-PS 1 439 615 und bekannt unter der Bezeichnung Fenvalerate; die Verbindung der Formel IIe ist beschrieben in Pesticide Manual, 6th Ed., 1979 und bekannt unter der Bezeichnung Cypermethrin.

Es wurde nun gefunden, daß die in den erfindungsgemäßen Mitteln vorliegenden Wirkstoffkombinationen überraschenderweise eine synergistische Wirkung aufweisen, d. h., daß sie die additive Wirkung der Einzelkomponenten in signifikantem Ausmaß übertreffen.

Für die in den erfindungsgemäßen Wirkstoffkombinationen maßgebenden Gewichtsverhältnisse einer Verbindung der Formel I zu einer Verbindung der Formeln IIa, IIb, IIc, IId oder IIe gilt der Bereich von 1 : 100 bis 100 : 1. Für die Entfaltung der synergistischen Wirkung ist das Kombinationsverhältnis im Bereich von 1 : 10 bis 10 : 1 als besonders bevorzugt wirksam anzusehen.

Die den erfindungsgemäßen Mitteln zugrundeliegende Erfindung wird anhand des folgenden Beispiels erläutert. Zu diesem Zweck wird die Bestimmung des synergistischen Effektes analog der Methode von Y. P. Sun und E. R. Johnson [J. Econ. Entomol. 53, 887 (1960)] zur Bestimmung der bioziden Wirksamkeit von Substanzgemischen auf bestimmte Species durchgeführt. Danach wird die synergistische Wirkung der kombinierten Wirkstoffe durch den Vergleich der Dosis-Wirkungs-Kurven der Kombinationen und ihrer Einzelkomponenten mit Hilfe der Cotoxizitätsindices bestimmt und wie folgt berechnet:

$$\text{Cotoxizitätsindex CI} = \frac{IR_{50}\ \text{Theorie}}{IR_{50}\ \text{Test}},$$

worin $IR_{50}$ die Konzentration der Wirkstoffe bzw. der Wirkstoffkombinationen in μg/ml, bei welcher bei 50% der Testorganismen keine Reproduktion stattfindet, bedeutet.

Der von einer Wirkstoffkombination erwartete theoretische $IR_{50}$-Wert beruht auf der Annahme einer additiven Wirkung der beiden Einzelkomponenten und wird nach der Formel für das harmonische Mittel

berechnet:

$$IR_{50}\ \text{Theorie} = \frac{1}{\dfrac{a}{IR_{50}A} + \dfrac{b}{IR_{50}B}},$$

worin a den Gewichtsanteil der Substanz A und b den Gewichtsanteil der Substanz B am Gesamtgewicht der Kombination A + B bedeuten.

Wirkstoffkombinationen mit synergistischer, d. h. mehr als additiver Wirkung der beiden Einzelkomponenten ergeben Cotoxizitätsindices mit Werten von >1.

## Beispiel 1

Vollgesogene Zecken (Boophilus microplus ♀♀) des organophosphor-resistenten Stammes Biarra wurden in Gruppen von je 40 Exemplaren in Petrischalen von 9 cm Durchmesser dorsal fixiert und mit frisch zubereiteten Lösungen oder Suspensionen der Wirkstoffe und der Wirkstoffkombinationen in Standard-WHO-Wasser behandelt. Dabei wurde so viel Flüssigkeit in die Schale gegossen, daß die Zecken vollständig untergetaucht waren. Nach 1stündigem Bad wurden die Flüssigkeiten abgegossen und zurückgebliebene Tropfen durch Abschütteln entfernt. Danach wurden die Petrischalen mit den darin befindlichen Zecken über Nacht bei Raumtemperatur getrocknet und anschließend bis zur Eiablage und Schlüpfen der Larven im Insektarium bei 28° C und 80% relativer Luftfeuchtigkeit 4 Wochen lang aufbewahrt.

Für die nachfolgende Evaluierung der Wirksamkeit der geprüften Substanzen oder Substanzgemische wurden folgende Kriterien gewertet: Mortalität und Sterilität der behandelten weiblichen Zecken sowie die Larven-Schlupfunfähigkeit der abgelegten Eier. Diese Wirkungen wurden für die Auswertung als »Inhibition of Reproduction« (IR) erfaßt.

Für jeden Wirkstoff bzw. jede Wirkstoffkombination wurde eine Verdünnungsreihe mit verschiedenen Konzentrationen geprüft und nach der Methode von Berkson (J. Am. Stat. Assoc. 48, 565, 1953) die entsprechenden Dosis-Wirkungs-Kurven berechnet und die $IR_{50}$-Werte bestimmt.

Aus den erhaltenen Werten für $IR_{50}$ Test und $IR_{50}$ Theorie wurden dann die Cotoxizitätsindices ermittelt (Tabelle 1). Es wurden Kombinationen der Wirkstoffe der Formeln I, IIa und IId geprüft.

Kombinationskomponenten:

$A_1$ = 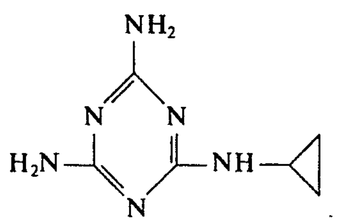 (Verb. Formel I)

$A_2$ = 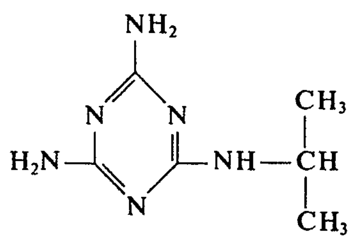 (Verb. Formel I)

B = Verbindung der Formel IIa
C = Verbindung der Formel IId

Tabelle 1

| Verbindung bzw. Verbindungsgemisch | Gewichtsverhältnis des Gemisches | $IR_{50}$ Test µg/ml | $IR_{50}$ Theorie µg/ml | Cotox. Index |
|---|---|---|---|---|
| $A_1$ | – | ≫15 000 | – | – |
| B | – | 7,7 | – | – |
| $A_1$ : B | 9 : 1 | 11,4 | 76,6 | 6,72 |
| $A_1$ : B | 1 : 9 | 4,1 | 8,6 | 2,08 |
| C | – | 10,1 | – | – |
| $A_1$ : C | 1 : 1 | 8,8 | 20,2 | 2,29 |
| $A_2$ | – | ≫15 000 | – | – |
| B | – | 7,7 | – | – |
| $A_2$ : B | 9 : 1 | 10,6 | 76,6 | 7,23 |
| $A_2$ : B | 1 : 1 | 5,2 | 15,4 | 2,96 |
| $A_2$ : B | 1 : 9 | 4,0 | 8,6 | 2,15 |
| C | – | 10,1 | – | – |
| $A_2$ : C | 1 : 1 | 9,9 | 20,2 | 2,03 |

Zur Bekämpfung von Insekten und Milben (Ordnung Acarina) können die Wirkstoffkombinationen als solche oder in Form von Mitteln, welche neben einer Wirkstoffkombination einen oder mehrere inerte Zusatzstoffe enthalten, eingesetzt werden.

Als inerte Zusatzstoffe kommen feste und flüssige, natürliche oder regenerierte, in der Formulierungstechnik übliche Stoffe in Betracht, wie beispielsweise Lösungs-, Dispergier-, Netz-, Haft-, Verdickungs- oder Bindemittel.

Die Wirkstoffkombinationen lassen sich zu Formulierungen wie Stäubemitteln, Emulsionskonzentraten, Granulaten, Dispersionen, Sprühmitteln, Lösungen oder Aufschlämmungen verarbeiten. Ferner können flüssige, insbesondere wäßrige Zubereitungen oder Konzentrate der Wirkstoffkombinationen für Viehbäder (»plunge dips«), Sprühgänge (»spray races«), Aufgüsse (»pour on«) und manuelle Applikationsmethoden zum Besprühen oder Auftragen (»handspray, handdressing«) verwendet werden.

Die Herstellung erfindungsgemäßer Mittel erfolgt zweckmäßigerweise durch inniges Vermischen und/oder Vermahlen der Wirkstoffkombinationen mit geeigneten Zusatzstoffen, gegebenenfalls unter Zusatz von gegenüber den Wirkstoffen inerten Dispergier- oder Lösungsmitteln. Die Wirkstoffkombinationen können beispielsweise in den folgenden Aufarbeitungsformen vorliegen und angewendet werden:

Feste Aufarbeitungsformen: Stäubemittel, Streumittel, Granulate;

Flüssige Aufarbeitungsformen:

a) Lösungen;
b) in Wasser dispergierbare Konzentrate der Wirkstoffkombinationen:
   Spritzpulver (wettable powder), Pasten, Emulsionen.

Die erfindungsgemäßen Mittel enthalten die Wirkstoffkombination zweckmäßigerweise in einem Anteil von 1 bis 80, vorzugsweise von 5 bis 50 Gew.-%.

Beispiel 2

Spritzpulver

| | |
|---|---|
| 5 bis 50 Gew.-Teile | Wirkstoffkombination werden in einer Mischapparatur mit |
| 5 Gew.-Teilen | eines aufsaugenden Trägermaterials (Kieselsäure K-320 oder Wessalon S) und |
| 35 bis 80 Gew.-Teilen | eines Trägermaterials (Bolus alba oder Kaolin B 24) und einem Dispergiermittelgemisch, bestehend aus |
| 5 Gew.-Teilen | eines Na-lauryl-sulfonates und |
| 5 Gew.-Teilen | eines Alkyl-aryl-polyglykoläthers, intensiv vermischt. Diese Mischung wird auf einer Stift- oder Luftstrahlmühle bis auf 5–15 μm gemahlen. Das so erhaltene Spritzpulver gibt in Wasser eine gute Suspension. |

Beispiel 3

Stäubemittel

| | |
|---|---|
| 5 Gew.-Teile | feingemahlene Wirkstoffkombination werden mit |
| 3 Gew.-Teilen | einer gefällten Kieselsäure und |
| 92 Gew.-Teilen | Talk intensiv gemischt. |

Die Wirkstoffkombinationen und die erfindungsgemäßen Mittel, welche diese enthalten, zeigen eine ausgeprägte Wirksamkeit gegen Insekten und Milben (Ordnung Acarina), insbesondere deren tierparasitäre Formen. Sie wirken insbesondere gegen Zecken sowie gegen Insekten der Ordnung Diptera, wobei hier vor allem die ausgezeichnete Wirkung gegen Dipteren, welche zur Familie Calliphoridae gehören, zu erwähnen ist. Es sind insbesondere die Larven dieser Insekten, welche große Schäden in der Nutzviehhaltung verursachen können und deren Bekämpfung daher von besonders großer Bedeutung ist. Ganz besondere Erwähnung verdient die hohe Effizienz der Wirkstoffkombinationen und der sie enthaltenden Mittel bei der Bekämpfung von Vertretern der zur Familie Calliphoridae gehörenden Gattung Lucilia, vor allem der Spezies Lucilia sericata (blowfly).

**Patentansprüche**

1. Insektizides und akarizides Mittel, welches neben einem oder mehreren inerten Zusatzstoffen eine Wirkstoffkombination enthält, dadurch gekennzeichnet, daß die Wirkstoffkombination aus einer Verbindung der Formel I

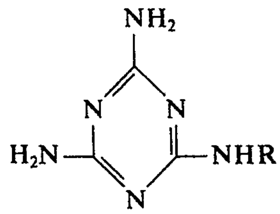

(I)

in welcher R eine Cyclopropyl- oder Isopropylgruppe bedeutet, und einer Verbindung, ausgewählt aus der Gruppe bestehend aus 3-(1,2-Dibrom-2,2-dichlor-äthyl)-2,2-dimethyl-cyclopropancarbonsäure-(α-cyan-3-phenoxybenzyl)ester der Formel IIa

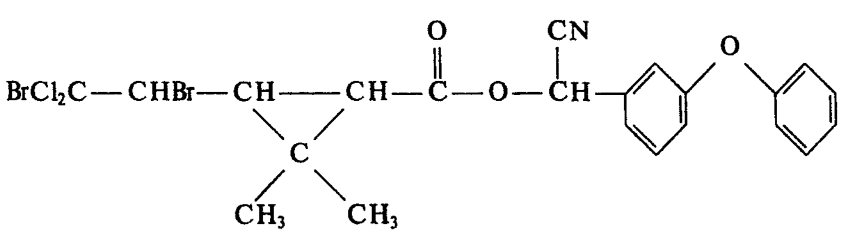

(IIa)

3-(2,2-Dichlorvinyl)-2,2-dimethylcyclopropancarbonsäure-(3-phenoxybenzyl)ester der Formel IIb

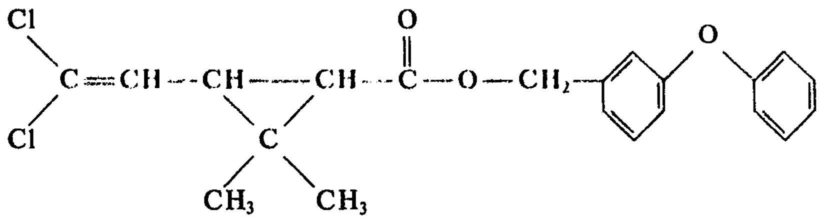

(IIb)

1 H-Inden-1-spiro-1'-[2,2-dimethyl-3-({α-cyano-3-phenoxybenzyl}-oxycarbonyl)-cyclopropan] der Formel IIc

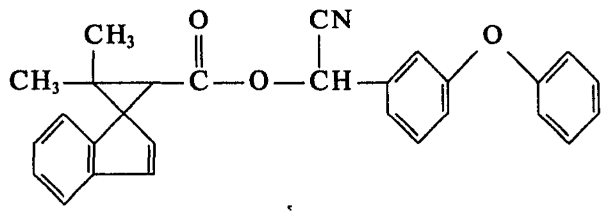

(IIc)

2-(4-Chlorphenyl)-isovaleriansäure-(α-cyano-3-phenoxybenzyl)ester der Formel IId

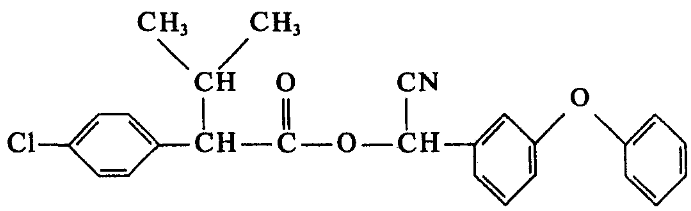

(IId)

und (1 RS)-cis,trans-3-(2,2-Dichlorvinyl)-2,2-dimethylcyclopropancarbonsäure-(RS)-(α-cyan-3-phenoxybenzyl)ester der Formel IIe

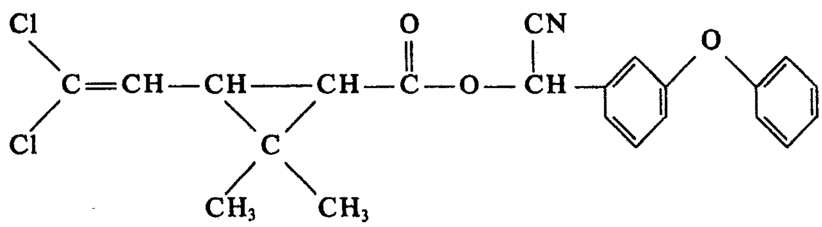

(IIe)

besteht.

2. Mittel nach Anspruch 1, dadurch gekennzeichnet, daß die Wirkstoffkombination ein Gewichtsverhältnis von einer Verbindung der Formel I zu einer Verbindung der Formel IIa, IIb, IIc, IId oder IIe von 100 : 1 bis 1 : 100 aufweist.

3. Mittel nach Anspruch 2, dadurch gekennzeichnet, daß die Wirkstoffkombination ein Gewichtsverhältnis von einer Verbindung der Formel I zu einer Verbindung der Formel IIa, IIb, IIc, IId oder IIe von 10 : 1 bis 1 : 10 aufweist.

4. Verwendung eines Mittels wie im Anspruch 1 beschrieben zur Bekämpfung von Insekten und zur Ordnung Acarina gehörenden parasitären Milben.

5. Verwendung einer Wirkstoffkombination wie im Anspruch 1 beschrieben zur Bekämpfung von Insekten und zur Ordnung Acarina gehörenden parasitären Milben.

6. Verwendung gemäß einem der Ansprüche 4 oder 5 zur Bekämpfung von Zecken.

7. Verwendung gemäß einem der Ansprüche 4 oder 5 zur Bekämpfung von Insekten.

8. Verwendung gemäß Anspruch 7 zur Bekämpfung von Insekten der Ordnung Diptera.

9. Verwendung gemäß Anspruch 8 zur Bekämpfung von Insekten der zur Ordnung Diptera gehörenden Familie Calliphoridae.

10. Verwendung gemäß Anspruch 9 zur Bekämpfung von Insekten der zur Familie Calliphoridae gehörenden Gattung Lucilia.

**Claims**

1. An insecticidal and acaridical composition which contains an active ingredient combination consisting of a compound of the formula I

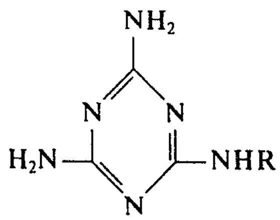

(I)

in which R is a cyclopropyl or and isopropyl group,and a compound selected fromthe groupconsisting of $\alpha$-cyclo-3-phenoxybenzyl 3-(1,2-dibromo-2,2-dichloroethyl) 2,2-dimethylcyclopropanecarboxylate of the formula IIa

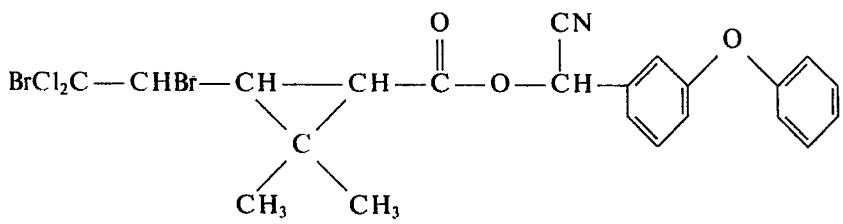

(IIa)

3-phenoxybenzyl(1 RS)-cis,trans-3-(2,2-dichlorovinyl)-2,2-dimethylcyclopropanecarboxylate of the formula IIb

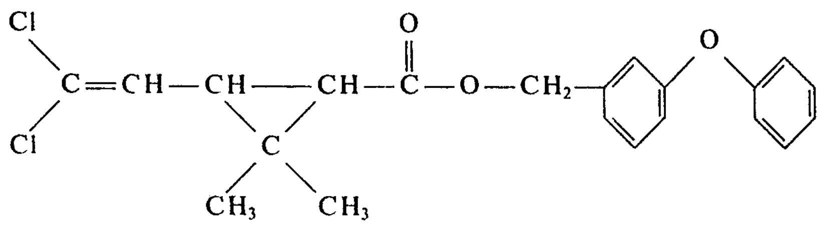

(IIb)

1 H-indene-1-spiro-1'-[2,2-dimethyl-3-({$\alpha$-cyano-3-phenoxybenzyl}-oxycarbonyl)-cyclopropane] of the formula IIc

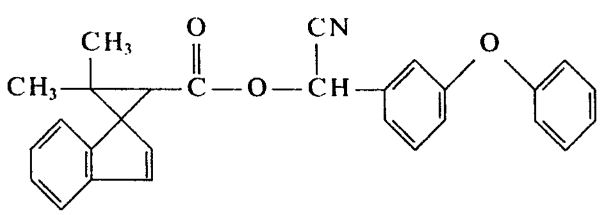

(IIc)

(Rs)-$\alpha$-cyano-3-phenoxybenzyl(RS)-2-(4-chlorophenyl)-3-methylbutyrate of the formula IId

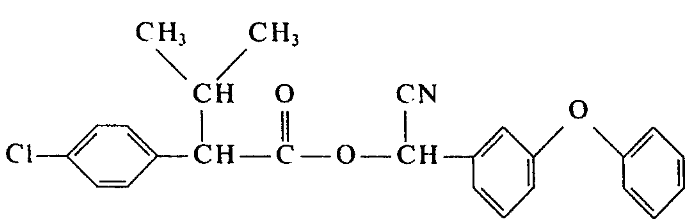

(IId)

and (RS)-$\alpha$-cyano-3-phenoxybenzyl(1 RS)-cis,trans-3-(2,2-dichlorovinyl)-2,2-dimethylcyclopropanecarboxylate of the formula IIe

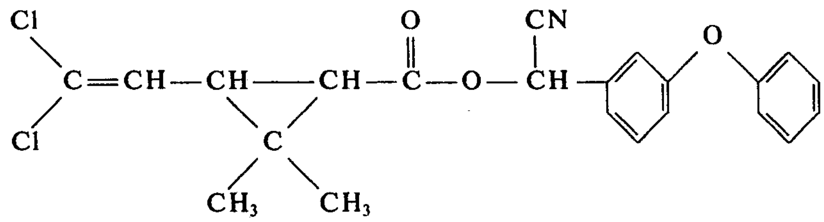

(IIe)

together with one or more inert adjuvants.

2. A composition according to claim 1, wherein the weight ratio of a compound of the formula I to a compound of the formula IIa, IIb, IIc, IId or IIe in the active ingredient combination is from 100 : 1 to 1 : 100.

3. A composition according to claim 2, wherein the weight ratio of a compound of the formula I to a compound of the formula IIa, IIb, IIc, IId or IIe in the active ingredient combination, is from 10 : 1 to 1 : 10.

4. A method of controlling insects and parasitic mites belonging to the order Acarina, which comprises the use of a composition as described in claim 1.

5. A method of controlling insects and parasitic mites belonging to the order Acarina, which comprises the use of an active ingredient combination as described in claim 1.

6. A method of controlling ticks, which comprises the use of an active ingredient combination as described in claim 1.

7. A method of controlling insects according to either of claims 4 or 5.

8. A method of controlling insects of the order Diptera according to claim 7.

9. A method of controlling insects of the order Diptera which belong to the family Calliphoridae according to claim 8.

10. A method of controlling insects of the genus Lucilia belonging to the family Calliphoridae according to claim 9.

**Revendications**

1. Agent insecticide et acaricide qui contient outre un ou plusieurs additifs inertes une combinaison de matières actives, caractérisé en ce que la combinaison de matières actives est constituée d'un composé de formule I

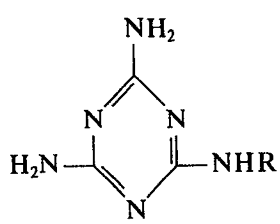

(I)

où R représente un groupe cyclopropyle ou isopropyle, et d'un composé choisi dans le groupe constitué par l'($\alpha$-cyano-3-phénoxybenzyl)ester de l'acide 3-(1,2-dibromo-2,2-dichloroéthyl)-2,2-diméthylcyclopropanecarboxylique de formule IIa

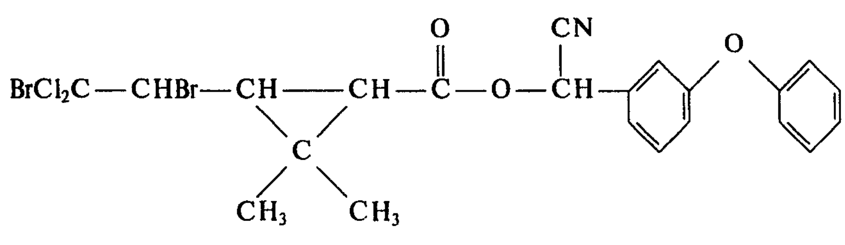

(IIa)

le (3-phénoxybenzyl)ester de l'acide 3-(2,2-dichlorovinyl)-2,2-diméthylcyclopropanecarboxylique de formule IIb

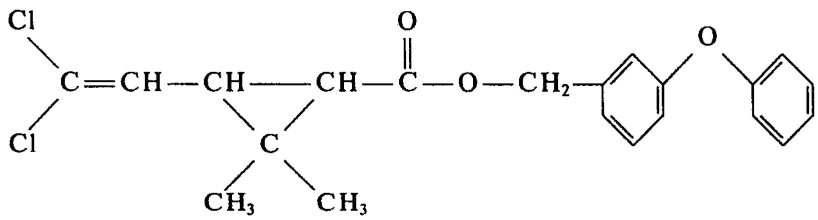

(IIb)

le 1 H-indène-1-spiro-1'-[2,2-diméthyl-3-({α-cyano-3-phénoxybenzyl}-oxy-carbonyl)-cyclopropane] de formule IIc

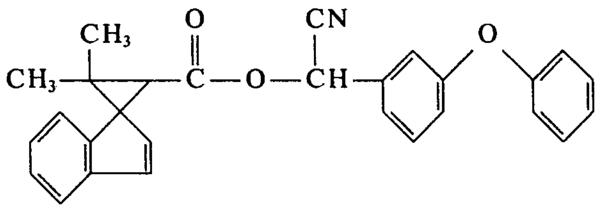

(IIc)

l'(α-cyano-3-phénoxybenzyl)ester de l'acide 2-(4-chlorophényl)-isovalérianique de formule IId

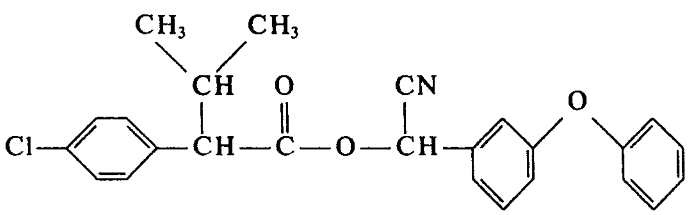

(IId)

et le (RS)-(α-cyano-3-phénoxybenzyl)ester de l'acide (1 RS)-cis,trans-3-(2,2-dichlorovinyl)-2,2-diméthylcyclopropanecarboxylique de formule IIe

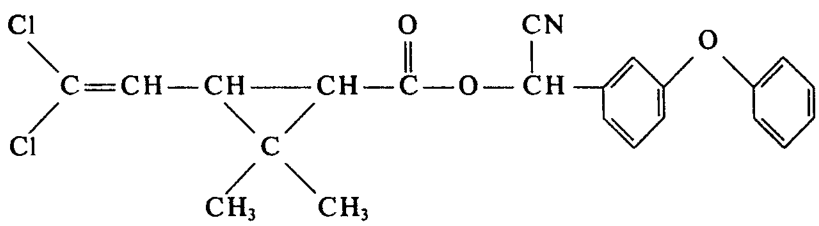

(IIe)

2. Agent selon la revendication 1, caractérisé en ce que la combinaison de substances actives présente un rapport pondéral d'un composé de formule I à un composé de formule IIa, IIb, IIc, IId ou IIe de 100 : 1 à 1 : 100.

3. Agent selon la revendication 2, caractérisé en ce que la combinaison de substances actives présente un rapport pondéral d'un composé de formule I à un composé de formule IIa, IIb, IIc, IId ou IIe de 10 : 1 à 1 : 10.

4. Application d'un agent tel que décrit dans la revendication 1 à la lutte contre les insectes et les mites parasitaires appartenant à l'ordre des acariens.

5. Application d'une combinaison de substances actives telle que décrite dans la revendication 1 à la lutte contre les insectes et les mites parasitaires appartenant à l'ordre des acariens.

6. Application selon l'une des revendications 4 ou 5 à la lutte contre les tiques.

7. Application selon l'une des revendications 4 ou 5 à la lutte contre les insectes.

8. Application selon la revendication 7 à la lutte contre les insectes de l'ordre des diptères.

9. Application selon la revendication 8 à la lutte contre les insectes de la famille des Calliphoridae appartenant à l'ordre des diptères.

10. Application selon la revendication 9 à la lutte contre les insectes du genre Lucilia appartenant à la famille des Calliphoridae.